(19) **Europäisches Patentamt** / **European Patent Office** / **Office européen des brevets**

(11) **EP 3 192 192 B1**

(12) **FASCICULE DE BREVET EUROPEEN**

(45) Date de publication et mention de la délivrance du brevet:
**13.06.2018 Bulletin 2018/24**

(51) Int Cl.:
**H04B 10/2581** *(2013.01)*    **H04J 14/04** *(2006.01)*

(21) Numéro de dépôt: **15763253.0**

(86) Numéro de dépôt international:
**PCT/EP2015/070202**

(22) Date de dépôt: **04.09.2015**

(87) Numéro de publication internationale:
**WO 2016/037930 (17.03.2016 Gazette 2016/11)**

(54) **METHODE DE SELECTION DE MODES POUR TRANSMISSION SUR FIBRES OPTIQUES DE TYPE MULTI-MODE OU MULTI-COEUR**

VERFAHREN ZUR AUSWAHL VON MODI ZUR ÜBERTRAGUNG ÜBER MULTIMODALE ODER MEHRKERNIGE OPTISCHE FASERN

METHOD FOR SELECTING MODES FOR TRANSMISSION OVER MULTIMODE OR MULTICORE OPTICAL FIBRES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.09.2014 FR 1458379**

(43) Date de publication de la demande:
**19.07.2017 Bulletin 2017/29**

(73) Titulaire: **Institut Mines-Telecom**
**75014 Paris (FR)**

(72) Inventeurs:
• **AWWAD, Elie**
  **F-75013 Paris (FR)**
• **REKAYA-BEN OTHMAN, Ghaya**
  **F-92160 Antony (FR)**
• **JAOUËN, Yves**
  **F-75019 Paris (FR)**

(74) Mandataire: **Hnich-Gasri, Naïma**
**Marks & Clerk France**
**Immeuble Visium**
**22, avenue Aristide Briand**
**94117 Arcueil Cedex (FR)**

(56) Documents cités:
**DE-A1-102007 015 225    US-A1- 2014 161 439**

• CVIJETIC N ET AL: "Block-Diagonal MIMO Equalization for Polarization-Multiplexed OFDM Transmission With Direct Detection", IEEE PHOTONICS TECHNOLOGY LETTERS, IEEE SERVICE CENTER, PISCATAWAY, NJ, US, vol. 23, no. 12, 1 juin 2011 (2011-06-01), pages 792-794, XP011480021, ISSN: 1041-1135, DOI: 10.1109/LPT.2011.2131642
• MORI TAKAYOSHI ET AL: "Wideband WDM coherent optical MIMO transmission over 50 [mu]m-core GI-MMF using selective mode excitation techn", OPTICAL FIBER TECHNOLOGY, vol. 19, no. 6, 2013, pages 658-664, XP028773773, ISSN: 1068-5200, DOI: 10.1016/J.YOFTE.2013.10.007
• HSU R C J ET AL: "Coherent Optical MIMO (COMIMO)", JOURNAL OF LIGHTWAVE TECHNOLOGY, IEEE SERVICE CENTER, NEW YORK, NY, US, vol. 23, no. 8, 1 août 2005 (2005-08-01), pages 2410-2419, XP011138114, ISSN: 0733-8724, DOI: 10.1109/JLT.2005.850787

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE**

La présente invention concerne de manière générale le domaine des télécommunications optiques et plus particulièrement celles utilisant des fibres optiques de type multi-mode ou multi-coeur.

**ÉTAT DE LA TECHNIQUE ANTÉRIEURE**

Les transmissions optiques sur longue distance (quelques centaines à quelques milliers de kms) utilisent des fibres optiques monomode. Celles-ci offrent l'avantage de ne pas présenter de dispersion modale (hormis la dispersion modale de polarisation) et de pouvoir supporter des débits élevés de plusieurs dizaines de Gbits/s par longueur d'onde, et ce pour une pluralité de longueurs d'onde.

Toutefois, pour des transmissions sur courtes distances, notamment pour des réseaux locaux large bande (LANs), les fibres multimode ou multi-coeur constituent une alternative particulièrement intéressante aux fibres monomodes. Les fibres multi-mode sont actuellement disponible sous forme de fibres plastiques (ou POF) ou de fibres en silice.

Les fibres multi-mode possèdent un coeur de grand diamètre autorisant la propagation de plusieurs modes spatiaux guidés, notés $LP_{\ell p}$ pour une polarisation linéaire où $\ell$ est l'indice de mode azimutal et $p$ l'indice de mode radial. Le mode $LP_{01}$ est le mode fondamental, le seul à pouvoir se propager dans une fibre monomode. Le nombre total de modes $LP_{\ell p}$ dépend des paramètres optogéométriques (diamètre du coeur, profil d'indice). De plus, pour chaque mode spatial $LP_{\ell p}$, on peut définir deux états de polarisation orthogonaux. L'information à transmettre est répartie sur les différents modes guidés (et le cas échéant sur les différentes polarisations de ces modes). Lorsque le nombre de modes guidés est faible, on parle de fibre optique faiblement multi-mode. Plus précisément, une fibre optique est dite faiblement multi-mode si son paramètre de fréquence normalisée V est tel que $V < 8$.

La capacité des fibres multimode est généralement supérieure à celle des fibres monomode, chaque mode étant séparément modulé et le signal à transmettre étant multiplexé sur les différents modes. Cette capacité est toutefois limitée par le couplage entre modes $L_{\ell p}$ lors de la propagation (diaphotie inter-mode).

Les fibres multi-coeur comprennent une pluralité de coeurs (typiquement de 2 à 7 coeurs) au sein d'une gaine commune. La dimension des coeurs est généralement suffisamment faible pour ne permettre qu'une propagation monomode dans chacun d'entre eux. Dans ce cas, celles-ci ne présentent pas de dispersion modale. En revanche, les ondes évanescentes créent un couplage entre les différents coeurs (diaphotie inter-coeur), le niveau de diaphotie est d'autant plus élevé que le nombre de coeurs est élevé et la distance inter-coeur est faible. Comme le couplage inter-mode évoqué précédemment, le couplage inter-coeur limite la portée de ces systèmes.

Des techniques MIMO (*Multiple Input Multiple Output*) peuvent être mises en oeuvre pour séparer la transmission sur les différents modes ou les différents coeurs et ainsi augmenter la capacité de transmission, à l'instar des systèmes de télécommunication sans fil multi-antennaires à diversité spatiale. Une description d'une méthode de transmission optique MIMO sur fibre optique multimode pourra être trouvée dans l'article de S. Randel *et al.* intitulé « 6x56 Gb/s mode-division multiplexed transmission over 33-km few-mode fiber enabled by 6x6 MIMO equalization » publié dans Opt. Express 19, 16697-16707 (2011).

Plus récemment la demande FR-A-2977099 au nom du présent déposant, a proposé d'utiliser un codage spatio-temporel pour transmettre des symboles sur une pluralité de modes (dans une fibre faiblement multi-mode) ou de coeurs. Cette technique permet de réduire sensiblement le taux d'erreur binaire par rapport au système de transmission optique MIMO non codé, précité.

Toutefois, les transmissions optiques MIMO, avec ou non codage spatio-temporel, sur fibres de type multi-mode ou multi-coeur, sont complexes à mettre en oeuvre pour un nombre élevé de modes/ coeurs, la complexité du traitement à la réception variant, selon le type décodage, au mieux en $O(M^3)$ où $M$ est le nombre de modes/coeurs de la fibre. En outre, le traitement en question requiert $M$ chaînes RF en parallèle, ce qui grève d'autant le coût des émetteurs/ récepteurs. Pour réduire tant la complexité de traitement que les coûts, il est nécessaire de sélectionner les modes/ coeurs au moyen desquels la transmission sera réalisée.

Le but de la présente invention est de proposer une méthode de sélection originale de modes dans une fibre multi-mode/ de coeurs dans une fibre optique multi-coeur pour un système de transmission optique MIMO.

**EXPOSÉ DE L'INVENTION**

La présente invention est définie par une méthode de sélection de modes pour système de transmission MIMO sur fibre optique multi-mode comprenant :

(a) une étape de mesure de la matrice de transfert du canal de transmission constitué par un ensemble de modes de ladite fibre optique ;

(b) une opération de transformation de ladite matrice de transfert en une matrice diagonale par blocs, chaque bloc étant relatif à un sous-ensemble de modes de ladite fibre optique ;

(c) une étape de détermination d'un gain et/ou d'une capacité de transmission (130) pour chacun des sous-ensembles de modes associés aux dits blocs ;

(d) une étape de sélection du sous-ensemble de modes correspondant au gain et/ou la capacité la plus élevé(e), le système de transmission MIMO utilisant alors uniquement les modes du sous-ensemble ainsi sélectionné pour transmettre sur ladite fibre optique.

La transformation de la matrice de transfert comprend avantageusement une étape de seuillage dans laquelle tous les éléments de la matrice inférieurs à une valeur de seuil prédéterminée, sont mis à zéro, suivie d'une étape de réorganisation de la matrice de transfert ainsi obtenue, par permutation de ses lignes et colonnes, les permutations sur les lignes et celles sur les colonnes étant identiques.

Selon une première variante, le sous-ensemble de modes est sélectionné selon le critère de gain

$$n_{opt} = \arg\max_{n=1,..,N} \left( \gamma_n \right) \text{ où } \gamma_n = \mathrm{Tr}\left( \mathbf{H}_n \mathbf{H}_n^H \right),$$ $N$ étant le nombre de sous-ensembles de modes, $\mathbf{H}_n$ étant la matrice

de transfert du canal de transmission réduit aux modes du sous-ensemble $n$, $\mathbf{H}_n^H$ étant la matrice transposée conjuguée de $\mathbf{H}_n$ et Tr(.) étant la fonction trace.

Selon une seconde variante, le sous-ensemble de modes est sélectionné selon le critère de gain

$$n_{opt} = \arg\max_{n=1,..,N} \left( \frac{\gamma_n}{M_n} \right) \text{ où } \gamma_n = \mathrm{Tr}\left( \mathbf{H}_n \mathbf{H}_n^H \right),$$ $N$ étant le nombre de sous-ensembles de modes, $M_n$ étant le cardinal

du sous-ensemble $n$, $\mathbf{H}_n$ étant la matrice de transfert du canal de transmission réduit aux modes du sous-ensemble $n$,

$\mathbf{H}_n^H$ étant la matrice transposée conjuguée de $\mathbf{H}_n$ et Tr(.) étant la fonction trace.

Selon une troisième variante, le sous-ensemble de modes est sélectionné selon un critère de capacité

$$n_{opt} = \arg\max_{n=1,..,N} \left( C_n \right) \text{ où } C_n = \sum_{m=1}^{M_n} \log\left( 1 + \gamma_n^m \frac{P_e}{M_n N_0} \right),$$ $M_n$ étant le cardinal du sous-ensemble $n$, $\gamma_n^m$ étant le gain du canal de transmission sur le mode $m$ du sous-ensemble $n$, $P_e$ étant la puissance d'émission répartie sur les $M_n$ modes et $N_0$ étant la puissance de bruit à la réception sur un mode.

Selon une quatrième variante, le sous-ensemble de modes est sélectionné selon un critère hybride de gain et de capacité $$n_{opt} = \arg\max_{n=1,..,N} \left( \Phi\left( C_n, \gamma_n \right) \right)$$ où $C_n$ est la capacité du canal de transmission réduit aux modes du sous-

ensemble $n$, $\gamma_n = \mathrm{Tr}\left( \mathbf{H}_n \mathbf{H}_n^H \right)$ où $\mathbf{H}_n$ étant la matrice de transfert du canal de transmission réduit aux modes du sous-

ensemble $n$, $\mathbf{H}_n^H$ étant la matrice transposée conjuguée de $\mathbf{H}_n$ et Tr(.) étant la fonction trace, et où $\Phi(.,.)$ est une fonction croissante de $C_n$ et $\gamma_n$.

Suite à la sélection du sous-ensemble de modes, le degré de modulation des symboles à transmettre sur les différents modes peut être choisi égal à une valeur $Q'$ telle que $M'\log Q'=M\log Q$ où $M$ est le cardinal de l'ensemble des modes avant sélection, $M'$ est le cardinal du sous-ensemble de modes sélectionné et $Q$ est le degré de modulation des symboles à transmettre avant la sélection du sous-ensemble de modes.

Alternativement, suite à la sélection du sous-ensemble de modes, le degré de modulation des symboles à transmettre sur les différents modes est choisi différent pour les différents modes du sous-ensemble de modes.

Enfin, les symboles à transmettre peuvent être soumis à un codage spatio-temporel, les éléments du code spatio-temporel étant ensuite transmis uniquement sur les modes dudit sous-ensemble de modes sélectionné.

L'invention concerne également une méthode de sélection de coeurs pour système de transmission MIMO sur fibre optique multi-coeur comprenant :

(a) une étape de mesure de la matrice de transfert du canal de transmission constitué par un ensemble de coeurs de ladite fibre optique ;

(b) une opération de transformation de ladite de transfert en une matrice diagonale par blocs, chaque bloc étant relatif à un sous-ensemble de coeurs de ladite fibre optique ;

(c) une étape de détermination d'un gain et/ou d'une capacité de transmission pour chacun des sous-ensembles de coeurs associés aux dits blocs ;

(d) une étape de sélection du sous-ensemble de coeurs correspondant au gain et/ou la capacité la plus élevé(e), le système de transmission MIMO utilisant alors uniquement les coeurs du sous-ensemble ainsi sélectionné pour transmettre sur ladite fibre optique.

La transformation de la matrice de transfert comprend avantageusement une étape de seuillage dans laquelle tous les éléments de la matrice inférieurs à une valeur de seuil prédéterminée, sont mis à zéro, suivie d'une étape de réorganisation de la matrice de transfert ainsi obtenue, par permutation de ses lignes et colonnes, les permutations sur les lignes et celles sur les colonnes étant identiques.

Selon une première variante, le sous-ensemble de coeurs est sélectionné selon le critère de gain

$$n_{opt} = \arg\max_{n=1,..,N} \left( \gamma_n \right)$$ où $\gamma_n = \mathrm{Tr}\left( \mathbf{H}_n \mathbf{H}_n^H \right)$, $N$ étant le nombre de sous-ensembles de coeurs, $\mathbf{H}_n$ étant la matrice

de transfert du canal de transmission réduit aux coeurs du sous-ensemble $n$, $\mathbf{H}_n^H$ étant la matrice transposée conjuguée de $\mathbf{H}_n$ et Tr(.) étant la fonction trace.

Selon une seconde variante, le sous-ensemble de coeurs est sélectionné selon le critère de gain

$$n_{opt} = \arg\max_{n=1,..,N} \left( \frac{\gamma_n}{M_n} \right)$$ où $\gamma_n = \mathrm{Tr}\left( \mathbf{H}_n \mathbf{H}_n^H \right)$, $N$ étant le nombre de sous-ensembles de coeurs, $M_n$ étant le cardinal

du sous-ensemble $n$, $\mathbf{H}_n$ étant la matrice de transfert du canal de transmission réduit aux coeurs du sous-ensemble $n$,

$\mathbf{H}_n^H$ étant la matrice transposée conjuguée de $\mathbf{H}_n$ et Tr(.) étant la fonction trace.

Selon une troisième variante, le sous-ensemble de coeurs est sélectionné selon un critère de capacité

$$n_{opt} = \arg\max_{n=1,..,N} \left( C_n \right)$$ où $C_n = \sum_{m=1}^{M_n} \log\left( 1 + \gamma_n^m \frac{P_e}{M_n N_0} \right)$, $M_n$ étant le cardinal du sous-ensemble $n$, $\gamma_n^m$ étant le gain du canal de transmission sur le coeur $m$ du sous-ensemble $n$, $P_e$ étant la puissance d'émission répartie sur les $M_n$ coeurs et $N_0$ étant la puissance de bruit à la réception sur un coeur.

Selon une quatrième variante, le sous-ensemble de coeurs est sélectionné selon un critère hybride de gain et de capacité $n_{opt} = \arg\max_{n=1,..,N} \left( \Phi\left( C_n, \gamma_n \right) \right)$ où $C_n$ est la capacité du canal de transmission réduit aux coeurs du sous-

ensemble $n$, $\gamma_n = \mathrm{Tr}\left( \mathbf{H}_n \mathbf{H}_n^H \right)$ où $\mathbf{H}_n$ étant la matrice de transfert du canal de transmission réduit aux coeurs du

sous-ensemble $n$, $\mathbf{H}_n^H$ étant la matrice transposée conjuguée de $\mathbf{H}_n$ et Tr(.) étant la fonction trace, et où $\Phi(.,.)$ est une

fonction croissante de $C_n$ et $\gamma_n$.

Suite à la sélection du sous-ensemble de coeurs, le degré de modulation des symboles à transmettre sur les différents coeurs peut être choisi égal à une valeur $Q'$ telle que $M'\log Q'=M\log Q$ où $M$ est le cardinal de l'ensemble des coeurs avant sélection, $M'$ est le cardinal du sous-ensemble de coeurs sélectionné et $Q$ est le degré de modulation des symboles à transmettre avant la sélection du sous-ensemble de coeurs.

Alternativement, suite à la sélection du sous-ensemble de coeurs, le degré de modulation des symboles à transmettre sur les différents coeurs peut être choisi différent pour les différents coeurs du sous-ensemble.

Avantageusement, les symboles à transmettre sont soumis à un codage spatio-temporel, les éléments du code spatio-temporel étant ensuite transmis uniquement sur les coeurs dudit sous-ensemble de modes sélectionné.

## BRÈVE DESCRIPTION DES DESSINS

D'autres caractéristiques et avantages de l'invention apparaîtront à la lecture de modes de réalisation préférentiels de l'invention, en référence aux figures jointes parmi lesquelles :

La Fig. 1 représente de manière schématique une méthode de sélection de modes pour un système de transmission MIMO sur fibre optique multi-mode, selon un premier mode de réalisation de l'invention ;

La Fig. 2 représente de manière schématique une méthode de sélection de coeurs pour un système de transmission MIMO sur fibre optique multi-coeur, selon un second mode de réalisation de l'invention.

## EXPOSÉ DÉTAILLÉ DE MODES DE RÉALISATION PARTICULIERS

Nous exposerons tout d'abord l'invention dans le cas d'un système de transmission MIMO sur fibre optique multi-mode. Dans un tel système, les symboles à transmettre à un instant donné sont multiplexés sur une pluralité $M$ de modes de la fibre (et le cas échéant pour un mode donné sur deux polarisation différentes). A la réception, les signaux reçus sur les différents modes sont fournis par exemple à un détecteur à maximum de vraisemblance (ML) pour estimer les symboles transmis.

Le canal de transmission constitué par les $M$ modes de la fibre optique peut alors être modélisé par :

$$\mathbf{Y} = \mathbf{H}\mathbf{X} + \mathbf{N} \tag{1}$$

où **X** est un vecteur de taille $M$ dont les éléments sont les symboles complexes transmis, **H** est une matrice de taille $M \times M$ représentant la fonction du canal de transmission et dénommée matrice de transfert du canal, **Y** est un vecteur de taille $M$ représentatif des signaux complexes reçus sur les différents modes et **N** est un vecteur de taille $M$ dont les éléments sont des échantillons de bruit supposé blanc additif gaussien et de variance $N_0$ par mode.

La fibre multi-mode comprend en fait une pluralité $L$ de tronçons, un amplificateur étant prévu entre chaque paire de tronçons consécutifs. Chaque tronçon de fibre peut être conceptuellement divisé en $K$ sections consécutives, les caractéristiques de la fibre étant stationnaires sur la longueur de chaque section. La matrice de transfert sur chaque tronçon peut être obtenue par un produit matriciel $\mathbf{T}_{\ell,k}\mathbf{R}_{\ell,k}$ où $\mathbf{R}_{\ell,k}$, de taille $M \times M$, est la matrice de couplage entre modes, relative à la section $k$ du tronçon $\ell$, et $\mathbf{T}_{\ell,k}$ est une matrice diagonale, également de taille $M \times M$, dont les éléments diagonaux donnent les déphasages respectifs des différents modes sur la section $k$ du tronçon $\ell$.

Chaque matrice de couplage $\mathbf{R}_{\ell,k}$ peut être modélisée comme une matrice aléatoire orthogonale ($\mathbf{R}_{\ell,k}.\mathbf{R}_{\ell,k}^T = \mathbf{I}_M$ où $\mathbf{I}_M$ est la matrice identité), ce qui traduit la conservation de l'énergie répartie sur les différents modes. Les coefficients non diagonaux de la matrice de couplage sont les coefficients de couplage entre modes. Leurs valeurs dépendent des intégrales de recouvrement des distributions de champ entre les différents modes se propageant dans la section du tronçon en question. Les intégrales de recouvrement dépendent elles-mêmes des imperfections et de la courbure du tronçon de fibre dans cette section.

La matrice $\mathbf{T}_{\ell,k}$ est une matrice dont les coefficients diagonaux sont de la forme $e^{j\theta_{\ell,k}^n}$ où $\theta_{\ell,k}^n$ est le résultat du tirage d'une variable aléatoire uniformément répartie sur $[0,2\pi]$.

Enfin, l'amplificateur entre deux tronçons $\ell$ et $\ell+1$ peut être modélisé par une matrice de gain $\mathbf{G}_\ell$. Plus précisément $\mathbf{G}_\ell$ est une matrice diagonale de taille $M \times M$ dont les éléments donnent les gains respectifs de l'amplificateur pour les différents modes. La matrice $\mathbf{G}_\ell$ peut être représentée par le produit d'un gain moyen (scalaire) avec une matrice d'offset autour de ce gain.

En définitive, la matrice de transfert du canal de transmission peut s'exprimer sous la forme :

$$\mathbf{H} = \prod_{\ell=1}^{L}\left(\mathbf{G}_\ell \prod_{k=1}^{K}\left(\mathbf{T}_{\ell,k}\mathbf{R}_{\ell,k}\right)\right) \tag{2}$$

le produit sur $k$ étant relatif à une même section et le produit sur $\ell$ étant relatif à un même tronçon.

En pratique, la matrice **H** met en évidence des sous-ensembles de modes, les modes appartenant à un même sous-ensemble étant couplés entre eux et les modes appartenant à des sous-ensembles distincts n'étant que très faiblement ou pas couplés. En d'autres termes, le couplage de modes ne joue de manière significative qu'au sein de sous-ensembles de modes déterminés.

Si l'on regroupe les modes par sous-ensemble, par exemple en effectuant des permutations sur les lignes et des permutation correspondantes sur les colonnes de la matrice de transfert du canal de transmission, **H,** on obtient une matrice diagonale par blocs, c'est-à-dire présentant la forme suivante :

$$\mathbf{H} = \begin{pmatrix} \mathbf{H}_1 & \mathbf{0} & \cdots & \mathbf{0} \\ \mathbf{0} & \mathbf{H}_2 & \ddots & \vdots \\ \vdots & \ddots & \ddots & \mathbf{0} \\ \mathbf{0} & \cdots & \mathbf{0} & \mathbf{H}_N \end{pmatrix} \qquad (3)$$

où les matrices (ou blocs) $\mathbf{H}_n$ , $n=1,...,N$ sont des matrices carrées de tailles $M_n \times M_n$, telles que $\sum_{n=1}^{N} M_n = M$ . Les termes hors de la diagonale des blocs $\mathbf{H}_n$ sont représentés en (3) comme nuls mais en pratique ils peuvent être simplement inférieurs à un seuil minimal de couplage.

L'idée à la base de l'invention est de sélectionner à l'émission, un sous-ensemble de modes correspondant à l'un des blocs $\mathbf{H}_n$ , $n=1,...,N$, parmi les $M$ modes de la fibre. Cette sélection est avantageusement effectuée selon un critère de gain et/ou un critère de capacité, comme décrit ci-après. A la réception, on pourra utiliser seulement le sous-ensemble de modes sélectionnés ou bien un sur-ensemble de ce dernier, voire tous les modes, pour décoder l'information. En effet, il pourra être intéressant de récupérer de l'information dans des modes qui, bien que non sélectionnés et donc non utilisés par l'émetteur, contiennent de l'information, le choix se faisant selon un critère de compromis entre performances et complexité.

Le critère de gain peut être envisagé selon différentes variantes. Le terme gain est à comprendre ici dans son acception la plus large, dans la mesure où la valeur de gain peut être inférieure à 1.

Si l'on suppose que la transmission des symboles est réalisée au moyen des modes associés au bloc $\mathbf{H}_n$, le gain de puissance peut s'exprimer par :

$$\gamma_n = \mathrm{Tr}\left(\mathbf{H}_n \mathbf{H}_n^H\right) \qquad (4)$$

Selon cette variante, on calcule les valeurs de gain, $\gamma_n$, pour les différents sous-ensembles $n=1,...,N$ et l'on retient le sous-ensemble $n_{opt}$ permettant d'obtenir le gain maximal (la perte minimale):

$$n_{opt} = \arg\max_{n=1,..,N}\left(\gamma_n\right) \qquad (5)$$

Selon une autre variante, on pourra sélectionner le sous-ensemble de modes pour lequel le gain moyen par mode est le plus élevé, autrement dit :

$$n_{opt} = \arg\max_{n=1,..,N}\left(\frac{\gamma_n}{M_n}\right) \qquad (6)$$

D'autres variantes pourront être alternativement considérées par l'homme du métier sans sortir pour autant du cadre de l'invention. Les matrices $\mathbf{H}_n \mathbf{H}_n^H$ , $n=1,...,N$ étant diagonalisables et leurs valeurs propres étant réelles et positives, notées $\gamma_n^m$ , $m=1,...,M_n$, pour la matrice $\mathbf{H}_n \mathbf{H}_n^H$, on pourra utiliser d'autres fonctions de gain que la somme des valeurs propres donnée en (4), par exemple leur produit $\prod_{m=1}^{M_n} \gamma_n^m$ (ou, de manière équivalente, $\sum_{m=1}^{M_n} \log\left(\gamma_n^m\right)$).

Le second critère de sélection est un critère de capacité. Si l'on suppose que la transmission des symboles est réalisée au moyen des modes associés au bloc $\mathbf{H}_n$, la capacité du canal, supposé à réponse linéaire, est donnée par :

$$C_n = \sum_{m=1}^{M_n} \log\left(1 + \gamma_n^m \frac{P_e}{M_n N_0}\right) \qquad (7)$$

où $P_e$ est la puissance totale d'émission, répartie sur les $M_n$ modes. Le rapport $\gamma_n^m \dfrac{P_e}{M_n N_0}$ représente le rapport signal sur bruit à la réception sur le mode $m$. A fort niveau de rapport signal sur bruit, la capacité du canal peut être approximée par :

$$C_n = M_n \log\left(\frac{P_e}{M_n N_0}\right) + \sum_{m=1}^{M_n} \log\left(\gamma_n^m\right) \qquad (8)$$

On peut alors choisir le sous-ensemble de modes $n_{opt}$ permettant d'obtenir la capacité de transmission maximale, soit:

$$n_{opt} = \arg\max_{n=1,..,N}\left(C_n\right) \qquad (9)$$

Enfin, on pourra utiliser un critère de sélection hybride fondé à la fois sur le gain et la capacité de transmission. Dans ce cas, le sous-ensemble de modes $n_{opt}$ vérifiant au mieux ce critère est donné par :

$$n_{opt} = \arg\max_{n=1,..,N}\left(\Phi\left(C_n, \gamma_n\right)\right) \qquad (10)$$

où $\Phi$ est une fonction croissante de $C_n$ et $\gamma_n$. Cette fonction pourra être par exemple une combinaison linéaire ou non de $C_n$ et $\gamma_n$, les coefficients de pondération dépendant de la priorité que l'on souhaite attribuer à la capacité de transmission et au gain.

Quel que soit le critère retenu, la méthode de sélection précitée permet de réduire le nombre de modes de $M$ à $M'=M_{n_{opt}}$.

Cette réduction peut avantageusement se faire à débit utile constant en augmentant le degré de modulation des symboles transmis. Plus précisément, si $Q$ était le cardinal de l'alphabet de modulation avant réduction du nombre de modes, on pourra choisir un alphabet de modulation de cardinal $Q'$ tel que :

$$M'\log Q' = M \log Q \qquad (11)$$

Par exemple si le nombre initial de modes est $M = 6$ avec une modulation 4-QAM on pourra utiliser une modulation 8-QAM sur $M' = 4$ modes ou une modulation 16-QAM sur $M' = 3$ modes. L'augmentation du degré de modulation s'accompagne nécessairement d'une dégradation correspondante des performances en termes de taux d'erreur binaire (BER). Il est alors possible de compenser cette dégradation en utilisant un codage spatio-temporel comme décrit dans la demande FR-A-2977099 citée dans la partie introductive.

De manière générale, dans le cas où un codage spatio-temporel est mis en oeuvre, les symboles sont transmis par blocs, un bloc de symboles étant transmis sur un intervalle de transmission (TTI), à l'aide d'une matrice de code spatio-temporel, C, dont les lignes correspondent aux différents modes et les colonnes à des utilisations successives du canal (*channel uses*) pendant l'intervalle de transmission. Le codage spatio-temporel permet de combattre les disparités de gain pouvant exister au sein du sous-ensemble de modes sélectionné.

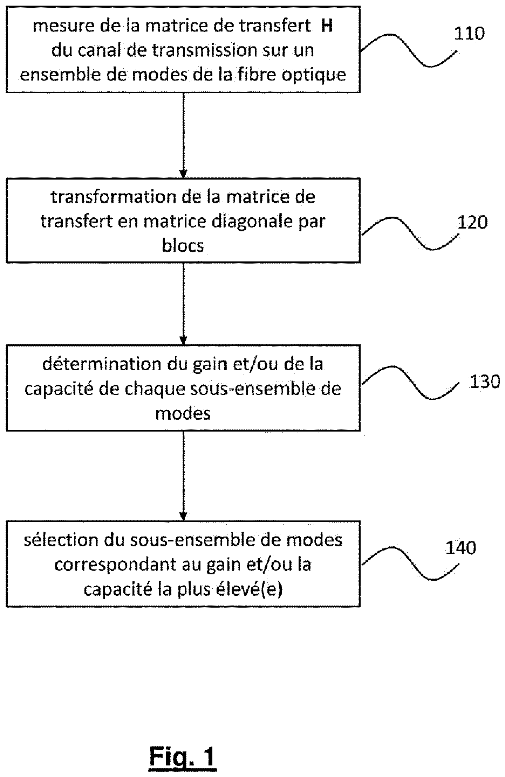

La Fig. 1 représente un ordinogramme d'une méthode de sélection de modes pour un système de transmission MIMO sur fibre optique multi-mode, selon un premier mode de réalisation de l'invention.

Il est important de noter que cette sélection pourra être effectuée une fois pour toutes, au moment de l'installation du système ou du récepteur. Alternativement, si une voie de retour est prévue vers l'émetteur, cette sélection pourra être effectuée périodiquement, pour tenir compte de la dérive/du vieillissement ou du remplacement des composants (amplificateurs notamment), l'indice $n_{opt}$ étant alors transmis sur cette voie par le récepteur.

En tout état de cause, la méthode de sélection comprend dans une première étape, 110, une mesure de la matrice de transfert du canal de transmission, **H,** sur un ensemble de modes, voire l'ensemble des modes de la fibre optique.

La mesure de la matrice de transfert peut être réalisée, de manière connue en soi, au moyen de symboles pilotes transmis par l'émetteur.

A l'étape 120, on transforme la matrice de transfert **H** en une matrice diagonale par blocs. Cette transformation peut comprendre un seuillage des éléments de la matrice. Par exemple, tous les éléments (complexes) de la matrice dont le module est inférieur à un seuil prédéterminé sont mis à zéro. Si, après seuillage, la matrice ne présente pas une structure de diagonale par blocs, on réorganise les lignes et les colonnes de la matrice de manière à regrouper les modes par sous-ensembles de modes. Les sous-ensembles de modes sont tels que les modes appartenant à un même sous-ensemble sont couplés entre eux et les modes appartenant à des sous-ensembles distincts ne sont pas couplés. La réorganisation consiste à effectuer une série de permutations sur les lignes et les colonnes, les permutations sur les lignes et les colonnes étant identiques (**H** est une matrice carrée).

A l'étape 130, on détermine un gain et/ou une capacité de transmission pour chacun des sous-ensembles de modes associés aux blocs de la matrice de transfert. Autrement dit, on calcule les valeurs $\gamma_n$, et/ou $C_n$ $n=1,...,N$ comme expliqué précédemment.

A l'étape 140, on sélectionne le sous-ensemble de modes correspondant au gain et/ou la capacité la plus élevé(e) au sens d'un critère prédéterminé, par exemple selon l'un des critères (5), (6), (9) ou (10).

Le système de transmission MIMO n'utilise alors que le sous-ensemble de modes sélectionné pour transmettre les symboles.

Le cas échéant, cette réduction du nombre de modes pourra s'accompagner d'une augmentation corrélative du degré de modulation des symboles à transmettre, voire un codage spatio-temporel comme décrit précédemment. Le degré de modulation pourra en outre être choisi différent pour les différents modes. On comprend en effet qu'un degré de modulation pourra notamment être choisi d'autant plus élevé pour un mode que le rapport signal/bruit en réception sur ce mode sera lui-même plus élevé.

Le second mode de réalisation de l'invention concerne une méthode de sélection de coeurs pour un système de transmission MIMO sur fibre optique multi-coeur.

La présentation faite pour la sélection de sous-ensemble de modes ne sera pas reprise intégralement pour des raisons de concision. Il apparaîtra cependant clairement à l'homme du métier que les couplages entre coeurs dans une fibre multi-coeur devront être traités de la même façon que les couplages entre modes d'une fibre multi-mode.

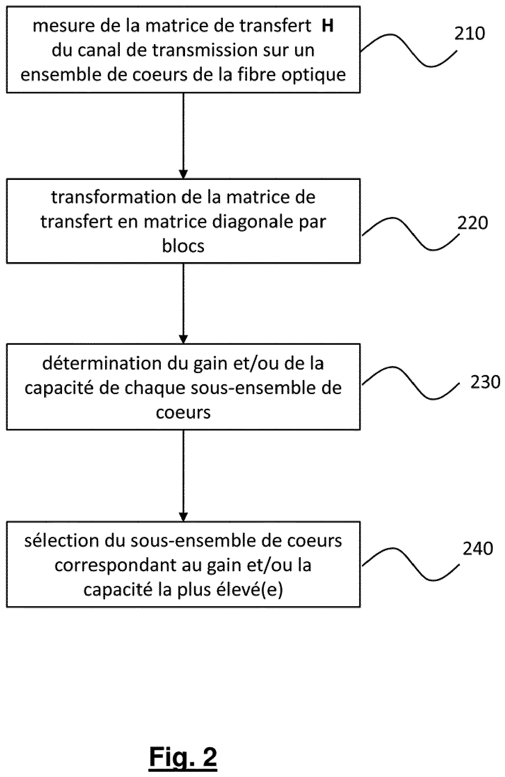

Seule la présentation générale de la méthode de sélection de coeurs sera décrite en relation avec la Fig. 2.

Comme pour la sélection de modes de la Fig. 1, la sélection de coeurs selon la Fig. 2 pourra être réalisée une fois pour toutes, lors de l'installation du système, ou bien de manière périodique et adaptive, si le système dispose d'une voie de retour.

La méthode de sélection comprend dans une première étape, 210, une mesure de la matrice de transfert du canal de transmission, **H,** sur un ensemble de coeurs de la fibre multi-coeur, préférablement sur l'ensemble des coeurs de cette fibre.

Là encore, la matrice de transfert peut être mesurée de manière connue en soi, au moyen de symboles pilotes transmis par l'émetteur.

A l'étape 220, on transforme la matrice de transfert **H** en une matrice diagonale par blocs. Cette transformation peut comprendre un seuillage des éléments de la matrice et une réorganisation des modes en sous-ensembles par permutations des lignes et des colonnes. Les sous-ensembles de coeurs sont tels que les coeurs appartenant à un même sous-ensemble sont couplés entre eux et les coeurs appartenant à des sous-ensembles distincts ne sont pas couplés.

A l'étape 230, on détermine un gain et/ou une capacité de transmission pour chacun des sous-ensembles des coeurs associés aux blocs de la matrice de transfert. Autrement dit, on calcule les valeurs $\gamma_n$, et/ou $C_n$ $n =1,...,N$ comme expliqué précédemment, les calculs portant sur les coeurs en lieu et place de modes de la fibre.

A l'étape 240, on sélectionne le sous-ensemble de coeur correspondant au gain et/ou la capacité la plus élevé(e) au sens d'un critère prédéterminé, par exemple selon l'un des critères (5), (6), (9) ou (10).

Le système de transmission MIMO n'utilise alors que le sous-ensemble de coeurs sélectionné pour transmettre les symboles.

Enfin, cette réduction du nombre de coeurs pourra s'accompagner d'une augmentation corrélative du degré de modulation des symboles à transmettre, voire un codage spatio-temporel comme décrit précédemment. Comme dans le premier mode de de réalisation, le degré de modulation pourra être choisi différent pour les différents coeurs, en fonction du rapport signal sur bruit sur chacun de ces coeurs.

**Revendications**

**1.** Méthode de sélection de modes pour système de transmission MIMO sur fibre optique multi-mode comprenant :

(a) une étape de mesure (110) de la matrice de transfert du canal de transmission constitué par un ensemble de modes de ladite fibre optique ;

(b) une opération de transformation (120) de ladite matrice de transfert en une matrice diagonale par blocs, chaque bloc étant relatif à un sous-ensemble de modes de ladite fibre optique ;

(c) une étape de détermination d'un gain et/ou d'une capacité de transmission (130) pour chacun des sous-ensembles de modes associés aux dits blocs ;

(d) une étape de sélection (140) du sous-ensemble de modes correspondant au gain et/ou la capacité la plus élevé(e), le système de transmission MIMO utilisant alors uniquement les modes du sous-ensemble ainsi sélectionné pour transmettre sur ladite fibre optique.

2. Méthode de sélection de modes selon la revendication 1, **caractérisée en ce que** la transformation de la matrice de transfert comprend une étape de seuillage dans laquelle tous les éléments de la matrice inférieurs à une valeur de seuil prédéterminée, sont mis à zéro, suivie d'une étape de réorganisation de la matrice de transfert ainsi obtenue, par permutation de ses lignes et colonnes, les permutations sur les lignes et celles sur les colonnes étant identiques.

3. Méthode de sélection de modes selon la revendication 1 ou 2, **caractérisée en ce que** le sous-ensemble de modes est sélectionné selon le critère de gain $n_{opt} = \arg\max\limits_{n=1,..,N} (\gamma_n)$ où $\gamma_n = \mathrm{Tr}\left(\mathbf{H}_n \mathbf{H}_n^H\right)$, $N$ étant le nombre de sous-ensembles de modes, $\mathbf{H}_n$ étant la matrice de transfert du canal de transmission réduit aux modes du sous-ensemble $n$, $\mathbf{H}_n^H$ étant la matrice transposée conjuguée de $\mathbf{H}_n$ et $\mathrm{Tr}(.)$ étant la fonction trace.

4. Méthode de sélection de modes selon la revendication 1 ou 2, **caractérisée en ce que** le sous-ensemble de modes est sélectionné selon le critère de gain $n_{opt} = \arg\max\limits_{n=1,..,N} \left(\dfrac{\gamma_n}{M_n}\right)$ où $\gamma_n = \mathrm{Tr}\left(\mathbf{H}_n \mathbf{H}_n^H\right)$, $N$ étant le nombre de sous-ensembles de modes, $M_n$ étant le cardinal du sous-ensemble $n$, $\mathbf{H}_n$ étant la matrice de transfert du canal de transmission réduit aux modes du sous-ensemble $n$, $\mathbf{H}_n^H$ étant la matrice transposée conjuguée de $\mathbf{H}_n$ et $\mathrm{Tr}(.)$ étant la fonction trace.

5. Méthode de sélection de modes selon la revendication 1 ou 2, **caractérisée en ce que** le sous-ensemble de modes est sélectionné selon un critère de capacité $n_{opt} = \arg\max\limits_{n=1,..,N} (C_n)$ où $C_n = \sum\limits_{m=1}^{M_n} \log\left(1 + \gamma_n^m \dfrac{P_e}{M_n N_0}\right)$, $M_n$ étant le cardinal du sous-ensemble $n$, $\gamma_n^m$ étant le gain du canal de transmission sur le mode $m$ du sous-ensemble $n$, $P_e$ étant la puissance d'émission répartie sur les $M_n$ modes et $N_0$ étant la puissance de bruit à la réception sur un mode.

6. Méthode de sélection de modes selon la revendication 1 ou 2, **caractérisée en ce que** le sous-ensemble de modes est sélectionné selon un critère hybride de gain et de capacité $n_{opt} = \arg\max\limits_{n=1,..,N} \left(\Phi\left(C_n, \gamma_n\right)\right)$ où $C_n$ est la capacité du canal de transmission réduit aux modes du sous-ensemble $n$, $\gamma_n = \mathrm{Tr}\left(\mathbf{H}_n \mathbf{H}_n^H\right)$ où $\mathbf{H}_n$ étant la matrice de transfert du canal de transmission réduit aux modes du sous-ensemble $n$, $\mathbf{H}_n^H$ étant la matrice transposée conjuguée de $\mathbf{H}_n$ et $\mathrm{Tr}(.)$ étant la fonction trace, et où $\Phi(.,.)$ est une fonction croissante de $C_n$ et $\gamma_n$.

7. Méthode de sélection de modes selon l'une des revendications précédentes, **caractérisée en ce que** suite à la sélection du sous-ensemble de modes, le degré de modulation des symboles à transmettre sur les différents modes est choisi égal à une valeur $Q'$ telle que $M'\log Q' = M\log Q$ où $M$ est le cardinal de l'ensemble des modes avant sélection, $M'$ est le cardinal du sous-ensemble de modes sélectionné et $Q$ est le degré de modulation des symboles à transmettre avant la sélection du sous-ensemble de modes.

8. Méthode de sélection de modes selon l'une des revendications 1 à 6, **caractérisée en ce que**, suite à la sélection du sous-ensemble de modes, le degré de modulation des symboles à transmettre sur les différents modes est choisi différent pour les différents modes du sous-ensemble de modes.

9. Méthode de sélection de modes selon l'une des revendications précédentes, **caractérisée en ce que** les symboles à transmettre sont soumis à un codage spatio-temporel, les éléments du code spatio-temporel étant ensuite transmis uniquement sur les modes dudit sous-ensemble de modes sélectionné.

10. Méthode de sélection de coeurs pour système de transmission MIMO sur fibre optique multi-coeur comprenant :

(a) une étape de mesure (210) de la matrice de transfert du canal de transmission constitué par un ensemble de coeurs de ladite fibre optique ;
(b) une opération de transformation (220) de ladite de transfert en une matrice diagonale par blocs, chaque bloc étant relatif à un sous-ensemble de coeurs de ladite fibre optique ;
(c) une étape de détermination d'un gain et/ou d'une capacité de transmission (230) pour chacun des sous-ensembles de coeurs associés aux dits blocs ;
(d) une étape de sélection (240) du sous-ensemble de coeurs correspondant au gain et/ou la capacité la plus élevé(e), le système de transmission MIMO utilisant alors uniquement les coeurs du sous-ensemble ainsi sélectionné pour transmettre sur ladite fibre optique.

11. Méthode de sélection de coeurs selon la revendication 10, **caractérisée en ce que** la transformation de la matrice de transfert comprend une étape de seuillage dans laquelle tous les éléments de la matrice inférieurs à une valeur de seuil prédéterminée, sont mis à zéro, suivie d'une étape de réorganisation de la matrice de transfert ainsi obtenue, par permutation de ses lignes et colonnes, les permutations sur les lignes et celles sur les colonnes étant identiques.

12. Méthode de sélection de coeurs selon la revendication 10 ou 11, **caractérisée en ce que** le sous-ensemble de coeurs est sélectionné selon le critère de gain $n_{opt} = \arg\max_{n=1,..,N}\left(\gamma_n\right)$ où $\gamma_n = \mathrm{Tr}\left(\mathbf{H}_n\mathbf{H}_n^H\right)$, $N$ étant le nombre de sous-ensembles de coeurs, $\mathbf{H}_n$ étant la matrice de transfert du canal de transmission réduit aux coeurs du sous-ensemble $n$, $\mathbf{H}_n^H$ étant la matrice transposée conjuguée de $\mathbf{H}_n$ et Tr(.) étant la fonction trace.

13. Méthode de sélection de coeurs selon la revendication 10 ou 11, **caractérisée en ce que** le sous-ensemble de coeurs est sélectionné selon le critère de gain $n_{opt} = \arg\max_{n=1,..,N}\left(\dfrac{\gamma_n}{M_n}\right)$ où $\gamma_n = \mathrm{Tr}\left(\mathbf{H}_n\mathbf{H}_n^H\right)$, $N$ étant le nombre de sous-ensembles de coeurs, $M_n$ étant le cardinal du sous-ensemble $n$, $\mathbf{H}_n$ étant la matrice de transfert du canal de transmission réduit aux coeurs du sous-ensemble $n$, $\mathbf{H}_n^H$ étant la matrice transposée conjuguée de $\mathbf{H}_n$ et Tr(.) étant la fonction trace.

14. Méthode de sélection de 2- coeurs selon la revendication 10 ou 11, **caractérisée en ce que** le sous-ensemble de coeurs est sélectionné selon un critère de capacité $n_{opt} = \arg\max_{n=1,..,N}\left(C_n\right)$ où $C_n = \sum_{m=1}^{M_n}\log\left(1+\gamma_n^m\dfrac{P_e}{M_nN_0}\right)$, $M_n$ étant le cardinal du sous-ensemble $n$, $\gamma_n^m$ étant le gain du canal de transmission sur le coeur $m$ du sous-ensemble $n$, $P_e$ étant la puissance d'émission répartie sur les $M_n$ coeurs et $N_0$ étant la puissance de bruit à la réception sur un coeur.

15. Méthode de sélection de coeurs selon la revendication 10 ou 11, **caractérisée en ce que** le sous-ensemble de coeurs est sélectionné selon un critère hybride de gain et de capacité $n_{opt} = \arg\max_{n=1,..,N}\left(\Phi\left(C_n,\gamma_n\right)\right)$ où $C_n$ est la capacité du canal de transmission réduit aux coeurs du sous-ensemble $n$, $\gamma_n = \mathrm{Tr}\left(\mathbf{H}_n\mathbf{H}_n^H\right)$ où $\mathbf{H}_n$ étant la matrice de transfert du canal de transmission réduit aux coeurs du sous-ensemble $n$, $\mathbf{H}_n^H$ étant la matrice transposée conjuguée de $\mathbf{H}_n$ et Tr(.) étant la fonction trace, et où $\Phi(.,.)$ est une fonction croissante de $C_n$ et $\gamma_n$.

16. Méthode de sélection de coeurs selon l'une des revendications 10 à 15, **caractérisée en ce que** suite à la sélection du sous-ensemble de coeurs, le degré de modulation des symboles à transmettre sur les différents coeurs est choisi égal à une valeur *Q'* telle que *M'*log*Q'*=*M*log*Q* où *M* est le cardinal de l'ensemble des coeurs avant sélection, *M'* est le cardinal du sous-ensemble de coeurs sélectionné et *Q* est le degré de modulation des symboles à transmettre avant la sélection du sous-ensemble de coeurs.

17. Méthode de sélection de coeurs selon l'une des revendications 10 à 15, **caractérisée en ce que** suite à la sélection du sous-ensemble de coeurs, le degré de modulation des symboles à transmettre sur les différents coeurs est choisi différent pour les différents coeurs du sous-ensemble.

18. Méthode de sélection de coeurs selon l'une des revendications 10 à 17, **caractérisée en ce que** les symboles à transmettre sont soumis à un codage spatio-temporel, les éléments du code spatio-temporel étant ensuite transmis uniquement sur les coeurs dudit sous-ensemble de modes sélectionné.

**Patentansprüche**

1. Verfahren zum Auswählen von Moden für ein MIMO-Übertragungssystem auf einer optischen Mehrmodenfaser, das Folgendes beinhaltet:

   (a) einen Schritt des Messens (110) der Übertragungsmatrix des Übertragungskanals, gebildet durch einen Satz von Moden der optischen Faser;
   (b) einen Vorgang des Umformens (120) der Übertragungsmatrix in eine diagonale Matrix nach Blöcken, wobei sich jeder Block auf einen Teilsatz von Moden der optischen Faser bezieht;
   (c) einen Schritt des Bestimmens eines/r Übertragungsgewinns und/oder - kapazität (130) für jeden der Teilsätze von Moden, die mit den Blöcken assoziiert sind;
   (d) einen Schritt des Auswählens (140) des Teilsatzes von Moden entsprechend dem/der höchsten Gewinn und/oder Kapazität, wobei das MIMO-Übertragungs system dann nur die Moden des so gewählten Teilsatzes zum Übertragen auf der optischen Faser benutzt.

2. Verfahren zum Auswählen von Moden nach Anspruch 1, **dadurch gekennzeichnet, dass** die Umformung der Übertragungsmatrix einen Schwellenwertbildungsschritt beinhaltet, in dem alle Elemente der Matrix, die kleiner sind als ein vorbestimmter Schwellenwert, auf null gesetzt werden, gefolgt von einem Schritt des Umorganisierens der so erhaltenen Übertragungsmatrix durch Schalten ihrer Reihen und Spalten, wobei die Schaltungen auf den Reihen und die auf den Spalten identisch sind.

3. Verfahren zum Auswählen von Moden nach Anspruch 1 oder 2, **dadurch gekennzeichnet, dass** der Teilsatz von Moden gemäß dem Gewinnkriterium $n_{opt}$ = arg max $\gamma_n$ ausgewählt wird, wobei $\gamma_n = \mathrm{Tr}\left(\mathbf{H}_n \mathbf{H}_n^H\right)$ ist, wobei *N* die Anzahl von Teilsätzen von Moden ist, $\mathbf{H}_n$ die Übertragungsmatrix des reduzierten Übertragungskanals zu den Moden des Teilsatzes *n* ist, $\mathbf{H}_n^H$ die transponierte konjugierte Matrix von $\mathbf{H}_n$ ist und Tr(.) die Trace-Funktion ist.

4. Verfahren zum Auswählen von Moden nach Anspruch 1 oder 2, **dadurch gekennzeichnet, dass** der Teilsatz von Moden gemäß dem Gewinnkriterium $n_{opt} = \arg \max_{n=1,...,N} \left(\frac{\gamma_n}{M_n}\right)$ ausgewählt wird, wobei $\gamma_n = \mathrm{Tr}\left(\mathbf{H}_n \mathbf{H}_n^H\right)$ ist, wobei *N* die Anzahl von Teilsätzen von Moden ist, wobei $M_n$ die Grundzahl des Teilsatzes *n* ist, $\mathbf{H}_n$ die Übertragungsmatrix des reduzierten Übertragungskanals auf die Moden des Teilsatzes *n* ist, $\mathbf{H}_n^H$ die transponierte konjugierte Matrix von $\mathbf{H}_n$ ist und Tr(.) die Trace-Funktion ist.

5. Verfahren zum Auswählen von Moden nach Anspruch 1 oder 2, **dadurch gekennzeichnet, dass** der Teilsatz von Moden gemäß einem Kapazitätskritierum $n_{opt} = \arg \max_{n=1,...,N} C_n$ ausgewählt wird, wobei

$$C_n = \sum_{m=1}^{M_n} \log\left(1 + \gamma_n^m \frac{P_e 5}{M_n N_0}\right)$$ ist, wobei $M_n$ die Grundzahl des Teilsatzes *n* ist, wobei $\gamma_n^m$ der Gewinn des Übertragungskanals auf der Mode *m* des Teilsatzes *n* ist, wobei $P_e$ die Sendeleistung ist, verteilt auf die $M_n$ Moden,

und wobei $N_0$ die Rauschleistung bei Empfang auf einer Mode ist.

6. Verfahren zum Auswählen von Moden nach Anspruch 1 oder 2, **dadurch gekennzeichnet, dass** der Teilsatz von Moden gemäß einem hybriden Gewinn- und Kapazitätskriterium $n_{opt} = \arg\max\limits_{n=1,...,N}(\Phi(C_n, \gamma_n))$ ist, wobei $C_n$ die Kapazität des reduzierten Übertragungskanals zu den Moden des Teilsatzes $n$ ist, $\gamma_n = \mathrm{Tr}\left(\mathbf{H}_n\mathbf{H}_n^H\right)$, wobei $\mathbf{H}_n$ die Übertragungsmatrix des reduzierten Übertragungskanals zu den Moden des Teilsatzes $n$ ist, wobei $\mathbf{H}_n^H$ die transponierte konjugierte Matrix von $\mathbf{H}_n$ ist und wobei Tr(.) die Trace-Funktion ist, und wobei $\Phi(.,.)$ eine ansteigende Funktion von $C_n$ und $\gamma_n$ ist.

7. Verfahren zum Auswählen von Moden nach einem der vorherigen Ansprüche, **dadurch gekennzeichnet, dass** nach dem Wählen des Teilsatzes von Moden der Grad an Modulation der auf den verschiedenen Modi zu übertragenen Symbole so gewählt wird, dass er gleich einem Wert Q' ist, so dass M' log Q' = M log Q ist, wobei M die Grundzahl des Satzes der Modi vor der Wahl ist, M' die Grundzahl des Teilsatzes von gewählten Modi ist und Q der Grad an Modulation der zu übertragenden Symbole vor der Wahl des Teilsatzes von Moden ist.

8. Verfahren zum Auswählen von Moden nach einem der Ansprüche 1 bis 6, **dadurch gekennzeichnet, dass** nach dem Wählen des Teilsatzes von Moden der Grad an Modulation der über die verschiedenen Moden zu übertragenden Symbole so gewählt wird, dass er sich für die unterschiedlichen Moden des Teilsatzes von Moden unterscheidet.

9. Verfahren zum Auswählen von Moden nach einem der vorherigen Ansprüche, **dadurch gekennzeichnet, dass** die zu übertragenden Symbole einer räumlich-zeitlichen Codierung unterzogen werden, wobei die Elemente des räumlich-zeitlichen Code dann nur auf den Moden des gewählten Teilsatzes von Moden übertragen werden.

10. Verfahren zum Auswählen von Kernen für ein MIMO-Übertragungssystem auf einer optischen Multikernfaser, das Folgendes beinhaltet:

   (a) einen Schritt des Messens (210) der Übertragungsmatrix des Übertragungskanals, gebildet von einem Satz von Kernen der optischen Faser;
   (b) einen Vorgang des Umformens (220) der Übertragungsmatrix in eine diagonale Matrix nach Blöcken, wobei sich jeder Block auf einen Teilsatz von Kernen der optischen Faser bezieht;
   (c) einen Schritt des Bestimmens eines/r Übertragungsgewinns und/oder - kapazität (230) für jeden der Teilsätze der mit den Blöcken assoziierten Kerne;
   (d) einen Schritt des Auswählens (240) des Teilsatzes von Kernen entsprechend dem/der höchsten Gewinn und/oder Kapazität, wobei das MIMO-Übertragungs system dann nur die Kerne des so gewählten Teilsatzes zum Übertragen auf der optischen Faser benutzt.

11. Verfahren zum Auswählen von Kernen nach Anspruch 10, **dadurch gekennzeichnet, dass** die Umformung der Übertragungsmatrix einen Schwellenwertbildungsschritt beinhaltet, in dem alle Elemente der Matrix, die kleiner sind als ein vorbestimmter Schwellenwert, auf null gesetzt werden, gefolgt von einem Schritt des Umorganisierens der so erhaltenen Übertragungsmatrix durch Schalten ihrer Reihen und Spalten, wobei die Schaltungen auf den Reihen und die auf den Spalten identisch sind.

12. Verfahren zum Auswählen von Kernen nach Anspruch 10 oder 11, **dadurch gekennzeichnet, dass** der Teilsatz von Kernen gemäß einem Gewinnkriterium $n_{opt} = \arg\max\limits_{n=1,...,N}\gamma_n$ gewählt wird, wobei $\gamma_n = \mathrm{Tr}\left(\mathbf{H}_n\mathbf{H}_n^H\right)$ ist, wobei N die Anzahl von Teilsätzen von Kernen ist, wobei $\mathbf{H}_n$ die Übertragungsmatrix des reduzierten Übertragungskanals zu den Kernen des Teilsatzes $n$ ist, wobei $\mathbf{H}_n^H$ die transponierte konjugierte Matrix von $\mathbf{H}_n$ ist und wobei Tr(.) die Trace-Funktion ist.

13. Verfahren zum Auswählen von Kernen nach Anspruch 10 oder 11, **dadurch gekennzeichnet, dass** der Teilsatz von Kernen gemäß dem Gewinnkriterium $n_{opt} = \arg\max\limits_{n=1,...,N}\left(\frac{\gamma_n}{M_n}\right)$ gewählt wird, wobei $\gamma_n = \mathrm{Tr}\left(\mathbf{H}_n\mathbf{H}_n^H\right)$ ist, wobei N die Anzahl von Teilsätzen von Kernen ist, wobei $M_n$ die Grundzahl des Teilsatzes $n$ ist, wobei $\mathbf{H}_n$ die Übertra-

gungsmatrix des reduzierten Übertragungskanals zu den Kernen des Teilsatzes $n$ ist, wobei $\mathbf{H}_n^H$ die transponierte konjugierte Matrix von $\mathbf{H}_n$ ist und Tr(.) die Trace-Funktion ist.

**14.** Verfahren zum Auswählen von Kernen nach Anspruch 10 oder 11, **dadurch gekennzeichnet, dass** der Teilsatz von Kernen gemäß einem Kapazitätskritierum $n_{opt} = \arg \max_{n=1,...,N} C_n$ gewählt wird, wobei $C_n = \sum_{m=1}^{M_n} \log\left(1 + \gamma_n^m \frac{P_e}{M_n N_0}\right)$ ist, wobei $M_n$ die Grundzahl des Teilsatzes $n$ ist, wobei $\gamma_n^m$ der Gewinn des Übertragungskanals auf dem Kern $m$ des Teilsatzes $n$ ist, wobei $P_e$ die Sendeleistung ist, verteilt auf die $M_n$ Kerne, und wobei $N_0$ die Rauschleistung beim Empfang auf einem Kern ist.

**15.** Verfahren zum Auswählen von Kernen nach Anspruch 10 oder 11, **dadurch gekennzeichnet, dass** der Teilsatz von Kernen gemäß einem hybriden Gewinn- und Kapazitätskriterium $n_{opt} = \arg \max_{n=1,...,N} (\Phi(C_n, \gamma_n))$ gewählt wird, wobei $C_n$ die Kapazität des reduzierten Übertragungskanals zu den Kernen des Teilsatzes $n$ ist, wobei $\gamma_n =$ Tr ($\mathbf{H}_n\mathbf{H}_n H$) ist, wobei $\mathbf{H}_n$ die Übertragungsmatrix des reduzierten Übertragungskanals zu den Kernen des Teilsatzes $n$ ist, wobei $\mathbf{H}_n^H$ die transponierte konjugierte Matrix von $\mathbf{H}_n$ ist und wobei Tr(.) die Trace-Funktion ist, und wobei $\Phi(.,.)$ eine ansteigende Funktion von $C_n$ und $\gamma_n$ ist.

**16.** Verfahren zum Auswählen von Kernen nach einem der Ansprüche 10 bis 15, **dadurch gekennzeichnet, dass** nach dem Wählen des Teilsatzes von Kernen der Grad an Modulation von auf den unterschiedlichen Kernen zu übertragenen Symbolen so gewählt wird, dass er gleich einem Wert $Q'$ ist, so dass $M' \log Q' = M \log Q$ ist, wobei $M$ die Grundzahl des Teilsatzes von Kernen vor dem Wählen ist, $M'$ die Grundzahl des gewählten Teilsatzes von Kernen ist und $Q$ der Grad an Modulation der zu übertragenden Symbole vor dem Wählen des Teilsatzes von Kernen ist.

**17.** Verfahren zum Auswählen von Kernen nach einem der Ansprüche 10 bis 15, **dadurch gekennzeichnet, dass** nach dem Wählen des Teilsatzes von Kernen der Grad an Modulation von auf den unterschiedlichen Kernen zu übertragenden Symbolen so gewählt wird, dass er sich für die unterschiedlichen Kerne des Teilsatzes unterscheidet.

**18.** Verfahren zum Auswählen von Kernen nach einem der Ansprüche 10 bis 17, **dadurch gekennzeichnet, dass** die zu übertragenden Symbole einer räumlich-zeitlichen Codierung unterzogen werden, wobei die Elemente des räumlich-zeitlichen Code dann nur auf den Kernen des gewählten Teilsatzes von Moden übertragen werden.

**Claims**

**1.** A method for selecting modes for a MIMO transmission system over a multi-mode optical fibre comprising:

(a) a step of measuring (110) the transfer matrix of the transmission channel formed by a set of modes of said optical fibre;
(b) an operation of converting (120) said transfer matrix into a diagonal block matrix, each block relating to a sub-set of modes of said optical fibre;
(c) a step of determining a gain and/or a transmission capacity (130) for each of the sub-sets of modes associated with said blocks;
(d) a step of selecting (140) the sub-set of modes corresponding to the highest gain and/or capacity, the MIMO transmission system then using only the modes of the sub-set thus selected to transmit over said optical fibre.

**2.** The method for selecting modes according to claim 1, **characterised in that** the conversion of the transfer matrix comprises a thresholding step, in which all the elements of the matrix that are below a predetermined threshold value are set to zero, followed by a step of reorganising the transfer matrix thus obtained by permutating its lines and columns, with the permutations on the lines and on the columns being identical.

**3.** The method for selecting modes according to claim 1 or claim 2, **characterised in that** the sub-set of modes is selected according to the gain criterion $n_{opt} = \arg \max_{n=1,...,N} \gamma_n$, where $\gamma_n = \mathrm{Tr}\left(\mathbf{H}_n\mathbf{H}_n^H\right)$, with $N$ being the number of sub-sets of modes, $\mathbf{H}_n$ being the transfer matrix of the transmission channel reduced to the modes of the sub-set $n$, $\mathbf{H}_n^H$ being the conjugate transpose matrix of $\mathbf{H}_n$ and Tr(.) being the trace function.

4. The method for selecting modes according to claim 1 or claim 2, **characterised in that** the sub-set of modes is selected according to the gain criterion $n_{opt} = \arg \max_{n=1,...,N} \left( \frac{\gamma_n}{M_n} \right)$, where $\gamma_n = \mathrm{Tr}\left(\mathbf{H}_n \mathbf{H}_n^H\right)$, with $N$ being the number of sub-sets of modes, $M_n$ being the cardinal of the sub-set $n$, $\mathbf{H}_n$ being the transfer matrix of the transmission channel reduced to the modes of the sub-set $n$, $\mathbf{H}_n^H$ being the conjugate transpose matrix of $\mathbf{H}_n$ and Tr(.) being the trace function.

5. The method for selecting modes according to claim 1 or claim 2, **characterised in that** the sub-set of modes is selected according to a capacity criterion $n_{opt} = \arg \max_{n=1,..,N} C_n$, where $C_n = \sum_{m=1}^{M_n} \log\left(1 + \gamma_n^m \frac{P_e}{M_n N_0}\right)$, with $M_n$ being the cardinal of the sub-set $n$, $\gamma_n^m$ being the gain of the transmission channel on the mode $m$ of the sub-set $n$, $P_e$ being the transmission power distributed on the $M_n$ modes and $N_0$ being the noise power upon reception on a mode.

6. The method for selecting modes according to claim 1 or claim 2, **characterised in that** the sub-set of modes is selected according to a hybrid criterion of gain and of capacity $n_{opt} = \arg \max_{n=1,...,N} \left( \Phi(C_n, \gamma_n) \right)$, where $C_n$ is the capacity of the transmission channel reduced to the modes of the sub-set $n$, with $\gamma_n = \mathrm{Tr}\left(\mathbf{H}_n \mathbf{H}_n^H\right)$ or $\mathbf{H}_n^H$ being the transfer matrix of the transmission channel reduced to the modes of the sub-set $n$, $\mathbf{H}_n^H$ being the conjugate transpose matrix of $\mathbf{H}_n$ and Tr(.) being the trace function and where $\Phi(.,.)$ is an increasing function of $C_n$ and $Y_n$.

7. The method for selecting modes according to any one of the preceding claims, **characterised in that**, following the selection of the sub-set of modes, the degree of modulation of the symbols to be transmitted over the various modes is selected as being equal to a value $Q'$, such that $M' \log Q' = M \log Q$, where $M$ is the cardinal of the set of modes before selection, $M'$ is the cardinal of the sub-set of selected modes and $Q$ is the degree of modulation of the symbols to be transmitted before the selection of the sub-set of modes.

8. The method for selecting modes according to any one of claims 1 to 6, **characterised in that**, following the selection of the sub-set of modes, the degree of modulation of the symbols to be transmitted over the various modes is selected as being different for the various modes of the sub-set of modes.

9. The method for selecting modes according to any one of the preceding claims, **characterised in that** the symbols to be transmitted are subject to space-time coding, the elements of the space-time code then being transmitted only over the modes of said sub-set of selected modes.

10. A method for selecting cores for a MIMO transmission system over a multi-core optical fibre comprising:

> (a) a step of measuring (210) the transfer matrix of the transmission channel formed by a set of cores of said optical fibre;
> (b) an operation of converting (220) said transfer matrix into a diagonal block matrix, each block relating to a sub-set of cores of said optical fibre;
> (c) a step of determining a gain and/or a transmission capacity (230) for each of the sub-sets of cores associated with said blocks;
> (d) a step of selecting (240) the sub-set of cores corresponding to the highest gain and/or capacity, the MIMO transmission system then using only the cores of the sub-set thus selected to transmit over said optical fibre.

11. The method for selecting cores according to claim 10, **characterised in that** the conversion of the transfer matrix comprises a thresholding step, in which all the elements of the matrix that are below a predetermined threshold value are set to zero, followed by a step of reorganising the transfer matrix thus obtained by permutating its lines and columns, the permutations on the lines and on the columns being identical.

12. The method for selecting cores according to claim 10 or claim 11, **characterised in that** the sub-set of cores is selected according to the gain criterion $n_{opt} = \arg\max_{n=1,...,N} \gamma_n$, where $\gamma_n = \mathrm{Tr}\left(\mathbf{H}_n\mathbf{H}_n^H\right)$, with $N$ being the number of sub-sets of cores, $\mathbf{H}_n$ being the transfer matrix of the transmission channel reduced to the cores of the sub-set $n$, $\mathbf{H}_n^H$ being the conjugate transpose matrix of $\mathbf{H}_n$ and Tr(.) being the trace function.

13. The method for selecting cores according to claim 10 or claim 11, **characterised in that** the sub-set of cores is selected according to the gain criterion $n_{opt} = \arg\max_{n=1,...,N}\left(\frac{\gamma_n}{M_n}\right)$, where $\gamma_n = \mathrm{Tr}\left(\mathbf{H}_n\mathbf{H}_n^H\right)$, with $N$ being the number of sub-sets of cores, $M_n$ being the cardinal of the sub-set $n$, $\mathbf{H}_n$ being the transfer matrix of the transmission channel reduced to the cores of the sub-set $n$, $\mathbf{H}_n^H$ being the conjugate transpose matrix of $\mathbf{H}_n$ and Tr(.) being the trace function.

14. The method for selecting cores according to claim 10 or claim 11, **characterised in that** the sub-set of cores is selected according to a capacity criterion $n_{opt} = \arg\max_{n=1,...,N} C_n$, where $C_n = \sum_{m=1}^{M_n}\log\left(1 + \gamma_n^m\frac{P_e}{M_n N_0}\right)$, with $M_n$ being the cardinal of the sub-set $n$, $\gamma_n^m$ the gain of the transmission channel on the core $m$ of the sub-set $n$, $P_e$ being the transmission power distrubuted on the $M_n$ cores and $N_0$ being the noise power upon reception on a core.

15. The method for selecting cores according to claim 10 or claim 11, **characterised in that** the sub-set of cores is selected according to a hybrid criterion of gain and of capacity $n_{opt} = \arg\max_{n=1,...,N}\left(\Phi(C_n, \gamma_n)\right)$, where $C_n$ is the capacity of the transmission channel reduced to the modes of the sub-set $n$, with $\gamma_n = \mathrm{Tr}\left(\mathbf{H}_n\mathbf{H}_n^H\right)$ or $\mathbf{H}_n^H$ being the transfer matrix of the transmission channel reduced to the cores of the sub-set $n$, $\mathbf{H}_n^H$ being the conjugate transpose matrix of $\mathbf{H}_n$ and Tr(.) being the trace function and where $\Phi$ (.,.) is an increasing function of $C_n$ and $Y_n$.

16. The method for selecting cores according to any one of claims 10 to 15, **characterised in that**, following the selection of the sub-set of cores, the degree of modulation of the symbols to be transmitted over the various cores is selected as being equal to a value Q', such that *M' log Q' = M log Q,* where *M* is the cardinal of the set of cores before selection, *M'* is the cardinal of the sub-set of selected cores and *Q* is the degree of modulation of the symbols to be transmitted before the selection of the sub-set of cores.

17. The method for selecting cores according to any one of claims 10 to 15, **characterised in that**, following the selection of the sub-set of cores, the degree of modulation of the symbols to be transmitted over the various cores is selected as being different for the various cores of the sub-set.

18. The method for selecting cores according to any one of claims 10 to 17, **characterised in that** the symbols to be transmitted are subject to space-time coding, the elements of the space-time code then being transmitted only over the cores of said sub-set of selected modes.

```
┌─────────────────────────────────┐
│  mesure de la matrice de transfert  H  │
│   du canal de transmission sur un   │ ────  110
│  ensemble de modes de la fibre optique  │
└─────────────────────────────────┘
              │
              ▼
┌─────────────────────────────────┐
│   transformation de la matrice de   │
│  transfert en matrice diagonale par  │ ────  120
│              blocs              │
└─────────────────────────────────┘
              │
              ▼
┌─────────────────────────────────┐
│   détermination du gain et/ou de la  │
│  capacité de chaque sous-ensemble de  │ ────  130
│              modes              │
└─────────────────────────────────┘
              │
              ▼
┌─────────────────────────────────┐
│  sélection du sous-ensemble de modes  │
│   correspondant au gain et/ou la    │ ────  140
│      capacité la plus élevé(e)      │
└─────────────────────────────────┘
```

## Fig. 1

```
┌─────────────────────────────────┐
│  mesure de la matrice de transfert  H   │          210
│  du canal de transmission sur un        │
│  ensemble de coeurs de la fibre optique │
└─────────────────────────────────┘
                │
                ▼
┌─────────────────────────────────┐
│  transformation de la matrice de        │          220
│  transfert en matrice diagonale par     │
│  blocs                                  │
└─────────────────────────────────┘
                │
                ▼
┌─────────────────────────────────┐
│  détermination du gain et/ou de la      │          230
│  capacité de chaque sous-ensemble de    │
│  coeurs                                 │
└─────────────────────────────────┘
                │
                ▼
┌─────────────────────────────────┐
│  sélection du sous-ensemble de coeurs   │          240
│  correspondant au gain et/ou la         │
│  capacité la plus élevé(e)              │
└─────────────────────────────────┘
```

# Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2977099 A